(19) Europäisches Patentamt
European Patent Office
Office européen des brevets

(11) **EP 1 846 269 B1**

(12) **EUROPÄISCHE PATENTSCHRIFT**

(45) Veröffentlichungstag und Bekanntmachung des Hinweises auf die Patenterteilung:
**29.02.2012 Patentblatt 2012/09**

(21) Anmeldenummer: **05825200.8**

(22) Anmeldetag: **21.12.2005**

(51) Int Cl.:
***B60R 21/01*** *(2006.01)*

(86) Internationale Anmeldenummer:
**PCT/EP2005/057060**

(87) Internationale Veröffentlichungsnummer:
**WO 2006/081902 (10.08.2006 Gazette 2006/32)**

(54) **AUSLÖSEVERFAHREN ZUR AKTIVIERUNG EINER LATERALGESCHWINDIGKEITSSCHÄTZUNG FÜR INSASSENSCHUTZVORRICHTUNGEN**

TRIGGERING METHOD FOR ACTIVATING A LATERAL SPEED ESTIMATION FOR PASSENGER PROTECTION DEVICES

PROCEDE DE DECLENCHEMENT DESTINE A L'ACTIONNEMENT D'UNE ESTIMATION DE VITESSE LATERALE POUR DES DISPOSITIFS DE PROTECTION DES OCCUPANTS D'UN VEHICULE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **03.02.2005 DE 102005004894**

(43) Veröffentlichungstag der Anmeldung:
**24.10.2007 Patentblatt 2007/43**

(73) Patentinhaber: **ROBERT BOSCH GMBH**
**70442 Stuttgart (DE)**

(72) Erfinder:
• **LICH, Thomas**
**71409 Schwaikheim (DE)**
• **SCHMID, Michael**
**70806 Kornwestheim (DE)**

(56) Entgegenhaltungen:
**DE-A1- 19 935 805    US-A1- 2003 229 438**

## Beschreibung

Stand der Technik

Die Erfindung geht aus von einem Auslöseverfahren zur Aktivierung einer Lateralgeschwindigkeitsschätzung für Insassenschutzvorrichtungen nach der Gattung des unabhängigen Patentanspruchs 1.

Aus der US 2003/0229438 A1 ist bekannt, ein Verfahren und ein in einem Rechner verwendbares Medium, insbesondere ein Computerprogramm, zur Fahrzeugstabilitätskontrolle. Es wird ein Schräglaufsteifigkeitskoeffizient für eine Hinterachse bestimmt. Es wird ein erster Untersteuerungskoeffizient bestimmt. Es wird eine gewünschte Querbeschleunigung basierend auf dem Untersteuerungskoeffizienten bestimmt. Es wird ein zweiter Untersteuerungskoeffizient basierend auf einer begrenzten Größe für die gewünschte Querbeschleunigung bestimmt. Es wird eine gewünschte Gierrate basierend auf dem zweiten Untersteuerungskoeffizienten bestimmt. Eine gewünschte Quergeschwindigkeit wird basierend auf der Gierrate und dem Schräglaufsteifigkeitskoeffizienten für die Hinterachse bestimmt.

Zahlen aus den USA belegen die Bedeutung der passiven Sicherheit bei Fahrzeugüberschlägen Im Jahr 1998 war die Hälfte aller tödlichen Einzelfahrzeugunfälle auf einen Überschlag zurückzuführen. Im gesamten Unfallgeschehen nimmt der Fahrzeugüberschlag einen Anteil von rund 20 Prozent ein.

Herkömmliche Systeme zur Überschlagserkennung betrachten die Wankbewegung und die Beschleunigungen in x-, y- und z-Richtung des Fahrzeugs. Auf dieser Basis ist eine sichere Erkennung eines Fahrzeugüberschlags möglich, wobei die Entscheidung, ob ein Überschlag vorliegt, jedoch erst zu einem späten Zeitpunkt des Überschlags sicher getroffen wird. Bei bestimmten Fällen von Fahrzeugüberschlägen, welchen ein fahrdynamisches Manöver vorausgeht, erfährt der Insasse hohe laterale Beschleunigungen. Derartige Manöver können beispielsweise zu so genannten Soil-Trip-Überschlägen führen. Diesbezüglich besteht hinsichtlich des Auslöseverhaltens noch Potential für zukünftige Insassenschutzsysteme.

Bekannte Verfahren beruhen beispielsweise auf der Auswertung eines Drehratensensors und zwei Beschleunigungssensoren, welche in einem zentralen Airbagsteuergerät integriert sind. Der Drehratensensor ermittelt nach dem Kreiselprinzip die Rotationsgeschwindigkeit um die Fahrzeuglängsachse und die Beschleunigungssensoren messen zusätzlich die Fahrzeugbeschleunigung in Quer- und Hochrichtung. Im Hauptalgorithmus wird dann die Drehrate ausgewertet. Mit den Messwerten der Beschleunigungssensoren lässt sich zum einen die Art des Überschlags erkennen, zum anderen dienen diese Werte der Plausibilitätsprüfung. Erkennt der Drehratenalgorithmus einen Überschlag, werden die Sicherheitsvorrichtungen nur bei gleichzeitiger Freigabe durch die Plausibilitätskontrolle aktiviert.

Bei einem anderen bekannten Verfahren wird eine rechtzeitige Auslöseentscheidung bei Überschlägen mit hoher lateraler Beschleunigung dadurch ermöglicht, dass ein Schwimmwinkel und die laterale Geschwindigkeit des Fahrzeugs einbezogen werden. Bei einem bekannten Verfahren zur erweiterten Überrollerkennung wird aus einer Gierrate und der Fahrzeuggeschwindigkeit in longitudinaler Richtung unter Berücksichtigung der lateralen Beschleunigung eine Schätzung für die laterale Geschwindigkeit durchgeführt, welche beim seitlichen Abdriften in den Grünstreifen ein Maß für die Überrollwahrscheinlichkeit des Fahrzeugs darstellt. Zur Bestimmung der lateralen Geschwindigkeit wird ebenfalls der so genannte Schwimmwinkel herangezogen.

Die Bestimmung des Schwimmwinkels in größeren Winkelbereichen und die Schätzung der lateralen Geschwindigkeit basierend auf dem bestimmten Schwimmwinkel, wie sie für die Überschlagserkennung benötigt werden, können jedoch nicht durch bekannte Verfahren durchgeführt werden, welche beispielsweise in der Fahrdynamikregelung eingesetzt werden. Da diese sind nur für Winkelbereiche unterhalb von 10° geeignet sind. Der geringe Gültigkeitsbereich ist darin begründet, dass eine Fahrdynamikregelung bei höheren Schwimmwinkeln nicht mehr erfolgreich durchgeführt werden kann.

Vorteile der Erfindung

Der erfindungsgemäße Auslöseverfahren zur Aktivierung einer Lateralgeschwindigkeitsschätzung für Insassenschutzvorrichtungen mit den Merkmalen des unabhängigen Patentanspruchs hat demgegenüber den Vorteil, dass Fahrzeugüberschläge bereits zu einem frühen Zeitpunkt erkannt werden. Dadurch ist gewährleistet, dass Sicherheitsvorrichtungen wie Gurtstraffer, Kopfairbag und Überrollbügel rechtzeitig aktiviert werden und sich somit das Verletzungsrisiko verringert. In vorteilhafter Weise ermöglicht das erfindungsgemäße Auslöseverfahren durch eine Straßenzustandserkennung und eine Über- und Untersteuerungserkennung, welche jeweils mit Hilfe fahrdynamischer Größen durchgeführt werden, eine sichere Aktivierung des Lateralgeschwindigkeitsschätzers für alle Straßenoberflächen. Dies gilt sowohl bei Nieder- als auch für Hochreibwert behaftete Straßenverhältnisse. Dadurch wird bei einem Ausbrechen des Fahrzeugs auf Niederreibwertstrecken eine Lateralgeschwindigkeitsschätzung durchgeführt und damit kann im Falle eines anschließenden Unfalls, d.h. eines Seitencrash und/oder eines Überrollvorgangs, in vorteilhafter Weise die Lateralgeschwindigkeit für die Auslösestrategie eingesetzt werden. Damit erhöht sich die Robustheit des Algorithmus im Gesamtsystem, da durch das erfindungsgemäße Auslöseverfahren die Wahrscheinlichkeit von Fehlauslösungen verringert wird.

Des Weiteren kann die Information über eine Ausbrechsituation des Fahrzeugs anderen Rückhaltesystemen zur Verfügung gestellt werden, so dass beispielsweise bei einer lateralen Bewegung des Fahrzeugs und anschließendem Seitencrash diese Information im Auslöseverhalten des Seitenalgorithmus eingesetzt werden kann.

Durch die in den abhängigen Ansprüchen aufgeführten Maßnahmen und Weiterbildungen sind vorteilhafte Verbesserungen des im unabhängigen Patentanspruch angegebenen Auslöseverfahrens zur Aktivierung einer Lateralgeschwindigkeitsschätzung für Insassenschutzvorrichtungen möglich.

Besonders vorteilhaft ist, dass während des Über- und Untersteuerungserkennungsvorgangs aus einem aktuellen Lenkwinkel, einer aktuellen Längsgeschwindigkeit und einem vorgegebenen Fahrzeugradstand eine theoretische Ackermann-Gierrate berechnet wird, welche zur Detektion eines Übersteuerungs- bzw. Untersteuerungsmanövers mit einer gemessenen aktuellen Gierrate verglichen werden kann.

Weiterhin ist es von Vorteil, dass während des Über- und Untersteuerungserkennungsvorgang aus einer Lateralbeschleunigung, einer Längsgeschwindigkeit und der aktuell gemessenen Gierrate eine Schwimmwinkeländerung berechnet werden kann. Dadurch kann das Risiko von Fehlerkennungen von Übersteuerungs- bzw. Untersteuerungsmanöver reduziert werden.

Die Schwimmwinkeländerung wird ausgehend von einem Startschwimmwinkel ermittelt, welcher vorzugsweise fortlaufend mittels einer Langzeitintegration bestimmt wird.

Weiterhin ist es von Vorteil, dass zur Erzeugung eines Über- und Untersteuerungsflagsignals während des Über- und Untersteuerungserkennungsvorgangs die Ackermann-Gierrate, die Schwimmwinkeländerung und die aktuell gemessene Gierrate durch eine erste Logikschaltung miteinander kombiniert und ausgewertet werden. Die erste Logikschaltung setzt das Über- und Untersteuerungsflagsignal, wenn bei der Auswertung eine Über- oder Untersteuerung des Fahrzeugs ermittelt wird. Dadurch kann das Risiko von Fehlerkennungen von Übersteuerungs- bzw. Untersteuerungsmanöver weiter reduziert werden. Zudem kann das Über- und Untersteuerungsflagsignal anderen Rückhaltesystemen zur Verfügung gestellt werden.

Die aktuelle Gierrate kann beispielsweise mit einem Gierratensensor und/oder mit zwei linearen Beschleunigungssensoren und/oder mit einem im Schwerpunkt angeordneten Sensor gemessen werden, welcher eine lineare Beschleunigung in mindestens zwei Raumachsen misst.

Weiterhin ist es von Vorteil, dass während des Straßenzustandserkennungsvorgangs aus der aktuell gemessenen Gierrate und der Längsgeschwindigkeit des Fahrzeugs eine theoretische Lateralbeschleunigung berechnet wird, welche zur Detektion eines Reibwertes der augenblicklich befahrenen Straßenoberfläche mit der gemessenen aktuellen Gierrate verglichen werden kann.

Zur Erzeugung eines Low-μ-Flagsignals während des Straßenzustandserkennungsvorgang werden in vorteilhafter Weise die theoretische Lateralbeschleunigung, die aktuell gemessene Lateralbeschleunigung und das Über- und Untersteuerungsflag durch eine zweite Logikschaltung miteinander kombiniert und ausgewertet, wodurch eine Fahrt auf einer Niederreibwertstrecke, einer Mittelreibwertstrecke und/oder einer Hochreibwertstrecke erkannt werden kann.

Die zweite Logikschaltung setzt beispielsweise das Low-p-Flagsignal, wenn bei der Auswertung ein niedriger oder mittlerer Reibwert für die befahrene Straße ermittelt wird.

Insbesondere ist es von Vorteil, dass zur Aktivierung der Lateralgeschwindigkeitsschätzung das Low-μ-Flagsignal des Straßenzustandserkennungsvorgangs, das Über- und Untersteuerungsflagsignal des Über- und Untersteuerungserkennungsvorgangs, die aktuell gemessenen Gierrate, die gemessene Lateralbeschleunigung und die berechnete Schwimmwinkeländerung durch eine dritte Logikschaltung miteinander kombiniert und ausgewertet werden, wobei die Lateralgeschwindigkeitsschätzung aktiviert wird, wenn bei der Auswertung eine Ausbrechsituation bei einem niedrigen und/oder mittleren Reibwert ermittelt wird. Dadurch kann eine Aktivierung des Lateralgeschwindigkeitsschätzers auch bei einem Ausbruchvorgang auf einer Niederreibwertfahrbahn ermöglicht werden.

Zeichnung

Ausführungsbeispiele der Erfindung sind in der Zeichnung dargestellt und werden in der nachfolgenden Beschreibung näher erläutert.

Es zeigen

Figur 1    ein schematisches Blockdiagramm eines Verfahrens zur Lateralgeschwindigkeitsschätzung für Insassenschutzvorrichtungen,

Figur 2    ein schematisches Blockdiagramm eines Über- und Untersteuerungserkennungsvorgangs,

Figur 3    ein schematisches Blockdiagramm eines Straßenzustandserkennungsvorgangs,

Figur 4    ein schematisches Blockdiagramm eines Auslöseverfahrens zur Aktivierung einer Lateralgeschwindigkeitsschätzung für Insassenschutzvorrichtungen,

Figur 5    eine schematischer Verlauf einer Lateralbeschleunigung, einer Schwimmwinkeländerung und einer Gierrate, und

Figur 6    eine schematischer Verlauf eines Schwimmwinkelalgorithmus und eines Referenzschwimmwinkels.

Beschreibung

Ein bekanntes Verfahren zur Bestimmung von Schwimmwinkeln, welche größer als der Wert 10° sind, sowie einer aus den Schwimmwinkeln abgeleiteten lateralen Geschwindigkeit basiert darauf, dass ein hoher Reibwert der Fahrbahn vorausgesetzt wird. Aus der Gleichung (1)

$$\dot{\beta} \approx \omega_z - \frac{a_y}{v_x} \quad \text{für kleine } \beta \tag{1}$$

ergibt sich die Schwimmwinkeländerung, welche ein Maß für eine Ausbrechsituation darstellt. Diese Beziehung ist jedoch bei ausreichend großen Lateral- und Gierbeschleunigungen aussagekräftig, so dass die Schwimmwinkeländerung relativ groß wird gegenüber nicht gefährlichen Fahrsituationen. Ein Nachteil des Verfahrens kann darin gesehen werden, dass bei Eis- und Schneebedeckter Fahrbahn sehr geringe Straßenreibwerte auftreten können.

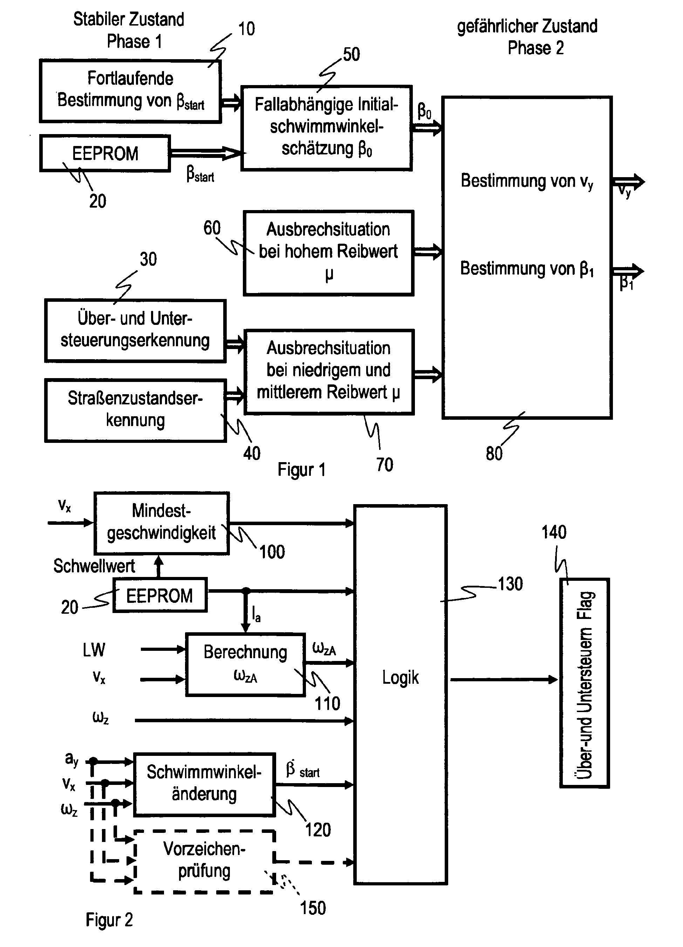

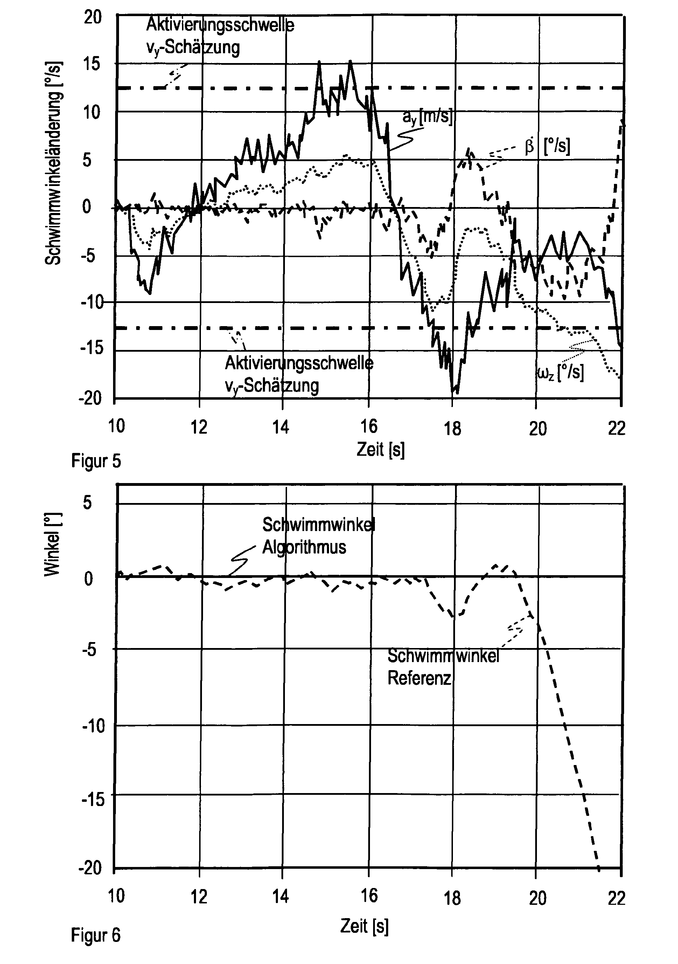

Beim Ausbrechen eines Fahrzeugs auf diesen Untergrundverhältnissen treten aufgrund der niederen Reibwerfverhältnisse sehr geringe Querbeschleunigungen und Gierraten auf. In Fig. 5 sind die Querbeschleunigungen und Gierraten bei einem Schleudermanöver auf Eis dargestellt. Die gestrichelte Kurve zeigt die berechnete Schwimmwinkeländerung gemäß Gleichung 1. Die strichpunktierten Linien markieren Aktivierungsschwellen des Lateralgeschwindigkeitsschätzers, welche durch die Schwimmwinkeländerungen überschritten werden müssen um eine Aktivierung des Lateralgeschwindigkeitsschätzers zu bewirken. Die Aktivierungsschwellen werden aber nur auf Strasse mit einem höheren Reibwert überschritten. Fig. 2 zeigt die Reaktion des o.g. Verfahrens. Der Referenzschwimmwinkel baut sich auf und ist nach wenigen Sekunden schon deutlich über 10°. Ein Fahrdynamikregelsystem hat hier keine Regelmöglichkeit und es kommt unweigerlich zu der Situation, dass das Fahrzeug nach wenigen Sekunden eine hohe Lateralgeschwindigkeit aufbauen kann. Die Ausgabe des Schwimmwinkelschätzers bleibt hingegen bei 0, da diese Situation nicht erfasst wird Das Verfahren kann das Ausbrechen des Fahrzeugs nicht erkennen. Durch eine andere Einstellung der Aktivierungsschwellen erhöht sich jedoch die Anfälligkeit gegenüber Fehlaktivierungen des Lateralgeschwindigkeitsschäters, so dass es zu einer unerwünschten Aktivierung von Rückhaltemitteln kommen könnte.

Erfindungsgemäß wird daher ein Auslöseverfahren zur Aktivierung einer Lateralgeschwindigkeitsschätzung für Insassenschutzvorrichtungen angegeben, welches basierend auf erfassten fahrdynamischen Größen einen Über- und Untersteuerungserkennungsvorgang und einen Straßenzustandserkennungsvorgang ausführt, welche zur Aktivierung der Lateralgeschwindigkeitsschätzung ausgewertet werden.

Figur 1 zeigt ein schematisches Blockdiagramm eines Verfahrens zur Lateralgeschwindigkeitsschätzung für Insassenschutzvorrichtungen. Wie aus Fig. 1 ersichtlich ist, sind ein Über- und Untersteuerungserkennungsvorgang 30 sowie ein Straßenzustandserkennungsvorgang 40 Hintergrundprozesse während einer Phase 1 des Verfahrens zur Lateralgeschwindigkeitsschätzung, d.h. während eines stabilen Zustands des Fahrzeugs. Zudem werden in dieser Phase 1 von einem Speicher, beispielsweise einem EEPROM, fahrzeugabhängige Werte wie Schwellwerte, Radstand, Startschwimmwinkel $\beta_{start}$ usw. zur Verfügung gestellt. Der Startschwimmwinkel $\beta_{start}$ wird beispielsweise ausgehend vom gespeicherten Wert fortlaufend mittels einer Langzeitintegration bestimmt und einer fallabhängigen Schätzung 50 des Initialschwimmwinkels $\beta_0$ zur Verfügung gestellt. Im Block 60 wird eine Ausbrechsituation bei einer Fahrt auf Straßen mit einem hohen Reibwert $\mu$ erkannt, z.B. durch Anwendung der Gleichung (1), und im Block 70 wird durch Anwenden des erfindungsgemäßen Auslöseverfahrens in Abhängigkeit des Über- und Untersteuerungserkennungsvorgangs 30 und des Straßenzustandserkennungsvorgangs 40 eine Ausbrechsituation auf Straßen mit einem niedrigen bzw. einem mittelten Reibwert $\mu$ erkannt. Wie weiter aus Fig. 1 ersichtlich ist, wird während Phase 2, d.h. beim Vorliegen eines gefährlichen Zustandes, im Block 80 das Verfahren zur Schwimmwinkelbestimmung und zur Lateralgeschwindigkeitsschätzung aktiviert, wobei die Aktivierung durch die im Block 60 oder im Block 70 erkannte Ausbrechsituation ausgelöst wird.

Figur 2 zeigt ein schematisches Blockdiagramm des Über- und Untersteuerungserkennungsvorgangs 30. Für die Über- und Untersteuerungserkennung 30 wird die so genannte Ackermann-Gierrate $\omega_{zA}$ herangezogen, welche im Block 110 durch Gleichung (2) berechnet und mit einer aktuellen Gierrate $\omega_z$ verglichen wird, welche von einem oder mehreren Sensoren gemessen und zur Verfügung gestellt wird. Dabei bezeichnet LW den Lenkwinkel, welcher von einem Fahrdynamiksystem und/oder einem Sensor bereitgestellt wird, $v_x$ die Fahrzeuglängsgeschwindigkeit im normalen Fahrbetrieb und $1_a$ den so genannten Radstand, welcher ein Parameter ist, der im Speicher 20 bereitgestellt wird. Mit der Gleichung (2) lässt sich die theoretische Gierrate eines Fahrzeugs bei stationärer Kreisfahrt berechnen.

$$\omega_{zA} = \frac{LW * v_x}{l_\alpha} \quad\quad\quad (2)$$

Um nun einen Übersteuerungs- bzw. Untersteuerungsmanöver zu detektieren wird in einer ersten Logikschaltung 130 die theoretische berechnete Gierrate $\omega_{zA}$ mit der gemessenen aktuellen Gierrate $\omega_z$ verglichen. Hierbei kann die Ist-Gierrate $\omega_z$ von einem Sensor, z.B. einem Gierratensensor, von zwei linearen Beschleunigungssensoren oder von einem im Schwerpunkt angeordneten Sensor zur Verfügung gestellt werden, welcher lineare Beschleunigung in mindestens zwei Raumachsen misst, vorzugsweise in die x- und y-Richtung. Außerdem ist es möglich, dass die aktuelle Gierrate $\omega_z$ über ein Bussystem von einem anderen System, z.B. einem ESP-System bereitgestellt wird.

Für den Vergleich wird gemäß Gleichung (3) die Differenz der beiden Größen $\omega_{zA}$ und $\omega_z$ berechnet und der Betrag gebildet, so dass sowohl ein Übersteuermanöver als auch ein Untersteuermanöver umfasst sind. Dabei kann das Vorzeichen gesichert werden, um die Situation für spätere Analysen verwenden zu können. Diese berechnete Größe wird dann mit einem Schwellwert verglichen, welcher vom Speicher 20 zur Verfügung gestellt wird.

$$|\omega_{zA} - \omega_z| > \text{Schwellwert} \quad\quad\quad (3)$$

Zur Vermeidung von Fehlaktivierungen können noch weitere Bedingungen vorausgesetzt werden. So kann beispielsweise im Block 150 die Vorzeichengleichheit einer Lateralbeschleunigung $a_y$ und der gemessenen aktuellen Gierrate $\omega_z$ überprüft werden. Durch die gestrichelte Darstellung wird gezeigt, dass die Überprüfung im Block 150 optional ist. Zudem wird im Block 120 aus der gemessenen Lateralbeschleunigung $a_y$, einer aktuellen Längsgeschwindigkeit $v_x$ und der aktuell gemessenen Gierrate $\omega_z$ eine Schwimmwinkeländerung $\beta$ bestimmt, welche in der ersten Logikschaltung 130 mit einem vom Speicher 20 zur Verfügung gestellten Schwellwert verglichen wird, wobei die berechnete Schwimmwinkeländerung $\beta$ zur Erfüllung der Bedingung kleiner oder gleich einem Schwellwert ist. Zudem sollte die Längsgeschwindigkeit $v_x$ eine vom Speicher 20 vorgegebenen Mindestgeschwindigkeit überschreiten. Zur Erzeugung eines Über- und Untersteuerungsflagsignals 140 während des Über- und Untersteuerungserkennungsvorgangs 30 werden die Ackermanng-Gierrate $\omega_{zA}$, die Schwimmwinkeländerung $\beta$ und die aktuell gemessene Gierrate $\omega_z$ durch die erste Logikschaltung 130 miteinander kombiniert und ausgewertet, wobei die erste Logikschaltung 130 das Über- und Untersteuerungsflagsignal 140 setzt, wenn bei der Auswertung eine Über- oder Untersteuerung des Fahrzeugs ermittelt wird, d.h. eine kritische Fahrsituation vorliegt. Dieses Flagsignal wird dann im Weiteren ausgewertet um eine Aktivierung des Lateralgeschwindigkeitsschätzers vorzunehmen.

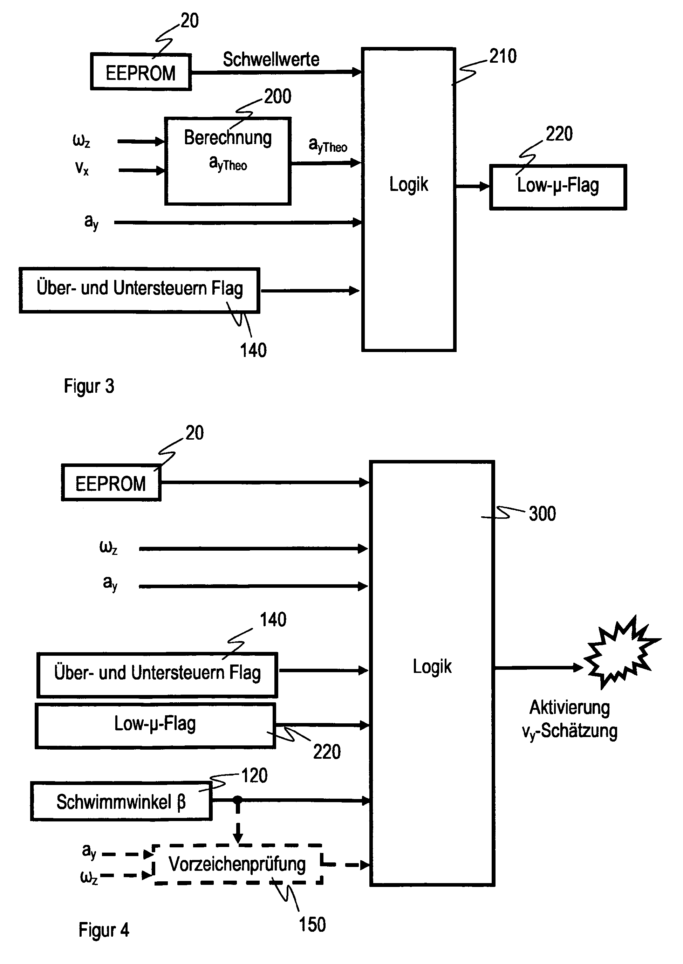

Figur 3 zeigt ein schematisches Blockdiagramm des Straßenzustandserkennungsvorgangs 40. Für die Straßenzustandserkennung bzw. ob eine Fahrt auf einer Straße mit Niederreibwert oder Schnee durchgeführt wird, wird neben der Information aus der Über- und Untersteuerungserkennung 30 auch eine theoretische Lateralbeschleunigung $a_{yTheo}$ herangezogen, welche aus der aktuell gemessenen Gierrate $\omega_z$ und der Längsgeschwindigkeit $v_x$ berechnet wird. Zur Erzeugung eines Low-$\mu$-Flagsignals 220 während des Straßenzustandserkennungsvorgang 40 werden die theoretische Lateralbeschleunigung $a_{yTheo}$, die aktuell gemessene Lateralbeschleunigung ($a_y$) und das Über- und Untersteuerungsflag 140 durch die zweite Logikschaltung 210 miteinander kombiniert und ausgewertet. Die zweite Logikschaltung 210 setzt das Low-$\mu$-Flagsignal 220, wenn bei der Auswertung ein niedriger oder mittlerer Reibwert $\mu$ für die befahrene Straße ermittelt wird.

Die zweite Logikschaltung 210 vergleicht beispielsweise die theoretische Lateralbeschleunigung $a_{yTheo}$ mit einer gemessenen aktuellen Lateralbeschleunigung $a_y$ gemäß Gleichung (4). Weicht die betragsmäßige Differenz von einem vom Speicher 20 vorgegebenen Schwellwert ab und liegt die gemessene aktuelle Lateralbeschleunigung $a_y$ gemäß Gleichung (5) über einem vorgegebenen weiteren Schwellwert, dann befindet sich das Fahrzeug auf einer Fahrbahn mit hohem Reibwert.

$$|a_y - a_{yTheo}| > \text{Schwellwert} \quad\quad\quad (4)$$

und

$$|a_y| > \text{Schwellwert} \tag{5}$$

Sind diese Bedingung nicht erfüllt, dann liegt eine Fahrt auf einer Niederreibwertstrecke vor. Die zweite Logikschaltung 210 überprüft, welche Bedingung während einer zugehörigen Über- und Untersteuersituation zeitmäßig länger anhält und setzt in Abhängigkeit von der Überprüfung das Low-μ-Flagsignal 220, welches anzeigt, dass das Fahrzeug auf einer Niederreibwertstrecke fährt. Dadurch wird noch keine Ausbrechsituation detektiert sondern lediglich festegestellt, dass das Fahrzeug auf einer Fahrbahn mit einem niedrigen Reibwert fährt.

Figur 4 zeigt ein schematisches Blockdiagramm eines Auslöseverfahrens zur Aktivierung einer Lateralgeschwindigkeitsschätzung für Insassenschutzvorrichtungen. Durch die erste und zweite Logikschaltung 130 und 210 werden die wesentlichen Komponenten zur Erkennung eines Ausbruchsvorgangs auf einer Niederreibwertfahrbahn berechnet. Wie aus Fig. 4 ersichtlich ist, werden zur Aktivierung der Lateralgeschwindigkeitsschätzung 80 das Low-μ-Flagsignal 220 des Straßenzustandserkennungsvorgangs 40, das Über- und Untersteuerungsflagsignal 140 des Über- und Untersteuerungserkennungsvorgangs 30, die aktuell gemessenen Gierrate $\omega_z$, die gemessene Lateralbeschleunigung $a_y$ und die berechnete Schwimmwinkeländerung $\beta$ durch eine dritte Logikschaltung 300 miteinander kombiniert und ausgewertet werden, wobei die Lateralgeschwindigkeitsschätzung aktiviert wird, wenn bei der Auswertung eine Ausbrechsituation bei einem niedrigen und/oder mittleren Reibwert ermittelt wird.

Die gemessenen aktuellen Werte, wie die Gierrate, Fahrzeuggeschwindigkeit usw., können von anderen Fahrzeugsystemen, beispielsweise vom ESP-Steuergerät, über ein Fahrzeugbussystem zur Verfügung gestellt werden.

**Patentansprüche**

1. Auslöseverfahren zur Aktivierung einer Lateralgeschwindigkeitsschätzung (80) für Insassenschutzvorrichtungen, bei welchem eine oder mehrere fahrdynamische Größen (LW, $v_x$, $\omega_z$, $a_y$) erfasst und ausgewertet werden, wobei basierend auf den erfassten fahrdynamischen Größen (LW, $v_x$, $\omega_z$, $a_y$) ein Über- und Untersteuerungserkennungsvorgang (30) durchgeführt werden, welche zur Aktivierung der Lateralgeschwindigkeitsschätzung (80) ausgewertet werden
**dadurch gekennzeichnet, dass**
zusätzlich ein Straßenzustandserkennungsvorgang (40) durchgeführt und ausgewertet wird, um die Lateralgeschwindigkeitsschätzung (80) zu aktivieren.

2. Verfahren nach Anspruch 1, **dadurch gekennzeichnet, dass** während des Über- und Untersteuerungserkennungsvorgangs (30) aus einem aktuellen Lenkwinkel (LW), einer aktuellen Längsgeschwindigkeit ($v_x$) und einem vorgegebnen Fahrzeugradstand eine Ackermann-Gierrate ($\omega_{za}$) berechnet wird.

3. Verfahren nach Anspruch 1 oder 2, **dadurch gekennzeichnet, dass** während des Über- und Untersteuerungserkennungsvorgang (30) aus einer Lateralbeschleunigung ($a_y$), einer Längsgeschwindigkeit ($v_x$) und einer aktuell gemessenen Gierrate ($\omega_z$ eine Schwimmwinkeländerung ($\beta_{punkt}$) berechnet wird.

4. Verfahren nach Anspruch 3, **dadurch gekennzeichnet, dass** die Schwimmwinkeländerung ($\beta_{punkt}$) ausgehend von einem Startschwimmwinkel ($\beta_{start}$) ermittelt wird, welcher vorzugsweise fortlaufend mittels einer Langzeitintegration bestimmt wird.

5. Verfahren nach Anspruch 3 oder 4, **dadurch gekennzeichnet, dass** zur Erzeugung eines Über- und Untersteuerungsflagsignals (140) während des Über- und Untersteuerungserkennungsvorgangs (30) die Ackermann-Gierrate ($\omega_{zA}$), die Schwimmwinkeländerung ($\beta_{punkt}$) und die aktuell gemessene Gierrate ($\omega_z$) durch eine erster Logikschaltung (130) miteinander kombiniert und ausgewertet werden, wobei die erste Logikschaltung (130) das Über- und Untersteuerungsflagsignal (140) setzt, wenn bei der Auswertung eine Über- oder Untersteuerung des Fahrzeugs ermittelt wird.

6. Verfahren nach einem der Ansprüche 1 bis 5, **dadurch gekennzeichnet, dass** die aktuelle Gierrate ($\omega_z$) mit einem Gierratensensor und/oder mit zwei linearen Beschleunigungssensoren und/oder einem im Schwerpunkt angeordneten Sensor gemessen wird, welcher eine lineare Beschleunigung in mindestens zwei Raumachsen misst.

7. Verfahren nach einem der Ansprüche 1 bis 6, **dadurch gekennzeichnet, dass** während des Straßenzustandserkennungsvorgangs (40) aus der aktuell gemessenen Gierrate ($\omega_z$) und der Längsgeschwindigkeit ($v_x$) eine theore-

tische Lateralbeschleunigung ($a_{yTheo}$) berechnet wird.

8. Verfahren nach Anspruch 7, **dadurch gekennzeichnet, dass** zur Erzeugung eines Low-$\mu$-Flagsignals (220) während des Straßenzustandserkennungsvorgang (40) die theoretische Lateralbeschleunigung ($a_{yTheo}$), die aktuell gemessene Lateralbeschleunigung ($a_y$) und das Über- und Untersteuerungsflag (140) durch eine zweite Logikschaltung (210) miteinander kombiniert und ausgewertet werden.

9. Verfahren nach Anspruch 8, **dadurch gekennzeichnet, dass** die zweite Logikschaltung (210) das Low-$\mu$-Flagsignal (220) setzt, wenn bei der Auswertung ein niedriger oder mittlerer Reibwert ($\mu$) für die befahrene Straße ermittelt wird.

10. Verfahren nach einem der Ansprüche 1 bis 9, **dadurch gekennzeichnet, dass** zur Aktivierung der Lateralgeschwindigkeitsschätzung (80) das Low-$\mu$-Flagsignal (220) des Straßenzustandserkennungsvorgangs (40), das Über- und Untersteuerungsflagsignal (140) des Über- und Untersteuerungserkennungsvorgangs (30), die aktuell gemessenen Gierrate ($\omega_z$, die gemessene Lateralbeschleunigung ($a_y$) und die berechnete Schwimmwinkeländerung ($\beta_{punkt}$) durch eine dritte Logikschaltung (300) miteinander kombiniert und ausgewertet werden, wobei die Lateralgeschwindigkeitsschätzung (80) aktiviert wird, wenn bei der Auswertung eine Ausbrechsituation bei einem niedrigen und/oder mittleren Reibwert ermittelt wird.

## Claims

1. Triggering method for activating a lateral speed estimation (80) for vehicle occupant protection devices, in which one or more movement dynamics variables (LW, $v_x$, $\omega_z$, $a_y$) are acquired and evaluated, wherein on the basis of the acquired movement dynamics variables (LW, $v_x$, $\omega_z$, $a_y$) an oversteering and understeering detection process (30) is carried out, which oversteering and understeering detection process (30) is evaluated for the activation of the lateral speed estimation (80),
**characterized in that**
in addition a road state detection process (40) is carried out and evaluated in order to activate the lateral speed estimation (80).

2. Method according to Claim 1, **characterized in that** during the oversteering and understeering detection process (30) an Ackermann yaw rate ($\omega_{zA}$) is calculated from a current steering angle (LW), a current longitudinal speed ($v_x$) and a predefined vehicle wheelbase.

3. Method according to Claim 1 or 2, **characterized in that** during the oversteering and understeering detection process (30) a change ($\beta_{punkt}$) in the sideslip angle is calculated from a lateral acceleration ($a_y$), a longitudinal speed ($v_x$) and the currently measured yaw rate ($\omega_z$).

4. Method according to Claim 3, **characterized in that** the change ($\beta_{punkt}$) in the sideslip angle is determined on the basis of a starting sideslip angle ($\beta_{start}$) which is preferably determined continuously by means of long-term integration.

5. Method according to Claim 3 or 4, **characterized in that**, in order to generate an oversteering and understeering flag signal (140) during the oversteering and understeering detection process (30), the Ackermann yaw rate ($\omega_{zA}$), the change ($\beta_{punkt}$) in the sideslip angle and the currently measured yaw rate ($\omega_z$) are combined with one another by a first logic circuit (130) and evaluated, wherein the first logic circuit (130) sets the oversteering and understeering flag signal (140) when oversteering or understeering of the vehicle is determined during the evaluation.

6. Method according to one of Claims 1 to 5, **characterized in that** the current yaw rate ($\omega_z$) is measured with a yaw rate sensor and/or with two linear acceleration sensors and/or a sensor which is arranged at the centre of gravity and which measures a linear acceleration in at least two spatial axes.

7. Method according to one of Claims 1 to 6, **characterized in that** during the road state detection process (40) a theoretical lateral acceleration ($a_{yTheo}$) is calculated from the currently measured yaw rate ($\omega_z$) and the longitudinal speed ($v_x$).

8. Method according to Claim 7, **characterized in that**, in order to generate a low-$\mu$-flag signal (220) during the road state detection process (40), the theoretical lateral acceleration ($a_{yTheo}$), the currently measured lateral acceleration (ay) and the oversteering and understeering flag (140) are combined with one another by a second logic circuit (210) and evaluated.

9. Method according to Claim 8, **characterized in that** the second logic circuit (210) sets the low-$\mu$-flag signal (220) when, during the evaluation, a low or medium coefficient of friction ($\mu$) is determined for the road being travelled on.

10. Method according to one of Claims 1 to 9, **characterized in that**, in order to activate the lateral speed estimation (80), the low-$\mu$-flag signal (220) of the road state detection process (40), the oversteering and understeering flag signal (140) of the oversteering and understeering detection process (30), the currently measured yaw rate ($\omega_z$), the measured lateral acceleration (ay) and the calculated change ($\beta_{punt}$) in the sideslip angle are combined with one another by a third logic circuit (300) and evaluated, wherein the lateral speed estimation (80) is activated when a swerving situation, at a low and/or medium coefficient friction, is determined during the evaluation.

**Revendications**

1. Procédé de déclenchement destiné à l'activation d'une estimation de vitesse latérale (80) pour des dispositifs de protection des occupants d'un véhicule, dans lequel une ou plusieurs grandeurs dynamiques de conduite (LW, $v_x$, $\omega_z$, $a_y$) sont détectées et exploitées, des processus d'identification de survirage et de sous-virage (30) étant réalisés sur la base des grandeurs dynamiques de conduite (LW, $v_x$, $\omega_z$, $a_y$), détectées évaluées pour l'activation de l'estimation de vitesse latérale (80), **caractérisé en ce que** qu'un processus d'identification d'état des routes (40) est également réalisé et exploité pour activer l'estimation de vitesse latérale (80).

2. Procédé selon la revendication 1, **caractérisé en ce que** pendant le processus d'identification de survirage et de sous-virage (30), on calcule un taux de lacet d'Ackermann ($\omega_{zA}$) à partir d'un angle de braquage (LW) actuel, d'une vitesse longitudinale ($v_x$) actuelle et d'un état prédéfini de l'empattement du véhicule.

3. Procédé selon la revendication 1 ou 2, **caractérisé en ce que** pendant le processus d'identification de survirage et de sous-virage (30), on calcule une variation d'angle de dérive ($\beta_{punkt}$) à partir d'une accélération latérale ($a_y$), d'une vitesse longitudinale ($v_x$) et d'un taux de lacet ($\omega_z$) actuellement mesuré.

4. Procédé selon la revendication 3, **caractérisé en ce que** la variation d'angle de dérive ($\beta_{punkt}$) est calculée à partir d'un angle de dérive au démarrage ($\beta_{start}$) défini de préférence en continu à l'aide d'une intégration de longue durée.

5. Procédé selon la revendication 3 ou 4, **caractérisé en ce que** la réalisation d'un signal de fanion de survirage et sous-virage (140) pendant le processus d'identification de survirage et de sous-virage (30) permet de combiner entre eux le taux de lacet d'Ackermann ($\omega_{zA}$), la variation d'angle de dérive ($\beta_{punkt}$) et le taux de lacet ($\omega_z$) actuellement mesuré par le biais d'un premier circuit logique (130) et de les exploiter, le premier circuit logique (130) mettant en place le signal de fanion de survirage et sous-virage (140) lorsqu'un survirage ou un sous-virage du véhicule est calculé lors de l'analyse.

6. Procédé selon l'une quelconque des revendications 1 à 5, **caractérisé en ce que** le taux de lacet ($\omega_z$) actuel est mesuré à l'aide d'un capteur de taux de lacet et/ou de deux capteurs d'accélération linéaires et/ou d'un capteur disposé dans le centre de gravité mesurant une accélération linéaire dans au moins deux axes dans l'espace.

7. Procédé selon l'une quelconque des revendications 1 à 6, **caractérisé en ce que** pendant le processus d'identification d'état des routes (40), une accélération latérale théorique ($a_{yTheo}$) est calculée à partir du taux de lacet ($\omega_z$) actuellement mesuré et de la vitesse longitudinale ($v_x$).

8. Procédé selon la revendication 7, **caractérisé en ce que** pour produire un signal de fanion de faible $\mu$ (220) pendant le processus d'identification d'état des routes (40), l'accélération latérale théorique ($a_{yTheo}$), l'accélération latérale (ay) actuellement mesurée et le fanion de survirage et sous-virage (140) sont combinés les uns avec les autres par le biais d'un deuxième circuit logique (210) puis exploités.

9. Procédé selon la revendication 8, **caractérisé en ce que** le deuxième circuit logique (210) met en place le signal de fanion de faible $\mu$ (220) lorsque lors de l'analyse, on détermine la présence d'une valeur de frottement ($\mu$) faible ou moyenne sur la route parcourue.

10. Procédé selon l'une quelconque des revendications 1 à 9, **caractérisé en ce que** pour réaliser l'activation de l'évaluation de la vitesse latérale (80), le signal de fanion de faible μ (220) du processus d'identification d'état des routes (40), le signal de fanion de survirage et sous-virage (140) du processus d'identification de survirage et de sous-virage (30), le taux de lacet ($\omega_z$) actuellement mesuré, l'accélération latérale (ay) mesurée et la variation d'angle de dérive ($\beta_{punkt}$) calculée sont combinés entre eux par le biais d'un troisième circuit logique (300) puis exploités, l'estimation de vitesse latérale (80) étant activée lorsque lors de l'analyse, une situation de dérapage est calculée en présence d'une valeur de frottement faible et/ou moyenne.

Stabiler Zustand
Phase 1

gefährlicher Zustand
Phase 2

Figur 1

Figur 2

Figur 3

Figur 4

Figur 5

Figur 6

**EP 1 846 269 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20030229438 A1